# EUROPEAN PATENT SPECIFICATION

(11) **EP 2 181 753 B1**
(45) Date of publication and mention of the grant of the patent: **21.12.2011**
(21) Application number: 08167740.3
(22) Date of filing: 28.10.2008
(51) Int. Cl.: B01D 53/10, B01D 53/30, B01D 53/68, C25C 3/22

(54) **A method and a device for verifying and controlling the removal of hydrogen fluoride from a process gas**
Verfahren und Vorrichtung zum Verifizieren und Regeln der Entfernung von Fluorwasserstoff aus einem Prozessgas
Procédé et dispositif pour vérifier et contrôler l'élimination de fluorure d'hydrogène d'un gaz de traitement

(43) Date of publication of application: 05.05.2010
(73) Proprietor: Alstom Technology Ltd, 5400 Baden (CH)
(72) Inventor: Bjarno, Odd Edgar, 1156, Oslo (NO); Wedde, Geir, 1262, Oslo (NO); White, Jesse, 4645, Nodeland (NO)
(74) Representative: Simonsson, Erik

(56) References cited:
- WO-A-96/15846
- WO-A-2004/056452
- WO-A-2008/024931

## Description

### Field of the Invention

The present invention relates to a method of removing hydrogen fluoride from a process gas, which is generated during the production of aluminium from alumina, wherein said method comprises the steps of mixing the process gas with particulate alumina in a scrubbing chamber, and transporting the process gas, comprising at least a part of the particulate alumina, from the scrubbing chamber to a filter device in which at least a portion of the reaction products formed in the reaction between the particulate alumina and the hydrogen fluoride is removed from the process gas.

The present invention also relates to a gas cleaning system, which is operative for removing hydrogen fluoride from a process gas that is generated during the production of aluminium from alumina.

### Background of the Invention

During the production of aluminium, an electrolytic reduction process is often utilized for producing the aluminium metal from alumina (Al₂O₃). The electrolytic reduction process generates a process gas, which comprises gaseous pollutants, in particular hydrogen fluoride, HF, that must be removed from the process gas before such process gas can be emitted to the ambient air.

US 4,501,599 describes an apparatus for removing gaseous pollutants, including hydrogen fluoride, and dust particles form a process gas generated in the production of aluminium. The process gas is collected at the site of the electrolytic reduction process and is transported to a plurality of scrubbing chambers. Alumina, (Al₂O₃), in particulate form is supplied to each scrubbing chamber and is mixed with the process gas to react with the gaseous pollutants entrained therein. An alumina separator and a dust collector are located downstream of each scrubbing chamber for the purpose of removing reaction products formed during the reaction between the alumina and the gaseous pollutants. The alumina separator and the dust collector also collect any excess alumina and dust particles that are entrained in the process gas. Hence, the process gas leaving the dust separator, which may be a fabric filter, has remaining entrained therein a very small concentration of gaseous pollutants and dust.

A problem from which the apparatus of US 4,501,599 suffers is that it is difficult to make sure that the emission of hydrogen fluoride does not exceed the emission limits established by the governmental authorities.

WHO 2004/056452 discloses a method of removing gaseous pollutants. A controller is connected to a pollutant concentration measuring device and controls a supply of reactant based on the pollutant concentration in the cleaned gas.

WO 96/15846 discloses a method for separating substances from a gaseous medium by dry adsorption using aluminum oxide. The aluminum oxide is after such separation recycled to an electrolysis furnace. The amount of undesirable substances recycled is monitored and minimized such that only a minimum of such substances are recycled to the electrolysis furnace.

### Summary of the Invention

An object of the present invention is to provide a method of verifying and controlling the removal of hydrogen fluoride from a process gas, which is generated during the production of aluminium from alumina, wherein said method is designed to be operative to decrease the risk that the emission of the remaining concentration of hydrogen fluoride will exceed established emission limits.

In accordance with the present invention, this object is achieved by virtue of a method of removing hydrogen fluoride from a process gas, which is generated during the production of aluminium from alumina, wherein said method comprises the steps of mixing the process gas with particulate alumina in a scrubbing chamber, and transporting the process gas, comprising at least a part of the particulate alumina, from the scrubbing chamber to a filter device in which at least a portion of the reaction products formed in the reaction between the particulate alumina and the hydrogen fluoride that is entrained therein is removed from the process gas, the method being characterized in that a concentration of sulphur dioxide, which is entrained in the process gas, is measured downstream of the filter device, and this measured concentration of sulphur dioxide is then utilized for purposes of evaluating the efficiency of the hydrogen fluoride removal.

In accordance with this method of the present invention, a measurement of the concentration of sulphur dioxide remaining entrained in the cleaned process gas is utilized for purposes of evaluating the efficiency of the hydrogen fluoride removal. To measure the removal efficiency of the hydrogen fluoride directly is more expensive and less precise than it is to measure the removal efficiency of sulphur dioxide. This is because a more complicated and expensive gas analyser is required in order to measure the efficiency of the removal of the hydrogen fluoride than is required for purposes of measuring the efficiency of sulphur dioxide removal, and because the sampling of the process gas for hydrogen fluoride is more complicated than for sulphur dioxide, due to the fact that hydrogen fluoride has a tendency to become absorbed on internal surfaces of a gas sampling system. The concentration of sulphur dioxide remaining entrained in the cleaned process gas, during normal operation, is often in the range of 1000 times higher than the concentration of hydrogen fluoride that remains entrained in the cleaned process gas, thereby resulting in a higher measurement accuracy when measuring the concentration of sulphur dioxide. Furthermore, it has been found that if there are problems with the gas cleaning equipment, such problems will affect the efficiency of the sulphur dioxide removal first, often more than one hour before the efficiency of the hydrogen fluoride removal would be significantly affected. Thus, the efficiency of the sulphur dioxide removal is a good indicator of the future efficiency of the hydrogen fluoride removal, and can provide an "early warning", such that problems in the gas cleaning process can be attended to before the efficiency of the hydrogen fluoride removal would be affected.

According to one embodiment of the present invention, said filter device comprises at least two units that are arranged in parallel relation to each other with respect to the direction of flow of the process gas. An advantage of this embodiment of the present invention is that maintenance and repair operations can be performed on one unit, while at least the one other unit remains still in operation.

According to said one embodiment of the present invention, the concentration of sulphur dioxide is measured separately downstream each of at least two of said at least two units. An advantage of this embodiment of the present invention is that it is possible therewith to find out in which of the units a problem has occurred, such that efforts to solve such problem can be initiated quickly and at the correct unit.

The concentration of sulphur dioxide downstream of the filter device is preferably measured at least once every 30 minutes. More preferably, the concentration of sulphur dioxide is measured at least once every 5 minutes, and most preferably the concentration of sulphur dioxide is measured continuously. An advantage of this embodiment of the present invention is that problems occurring in the gas cleaning system can thereby be observed, by means of the measured concentration of sulphur dioxide, before the efficiency of the hydrogen fluoride removal is affected. To this end, as noted previously hereinbefore the efficiency of the hydrogen fluoride removal is affected by an operating problem typically an hour or more after the efficiency of the sulphur dioxide removal is affected. Hence, by measuring the concentration of sulphur dioxide at least once every 30 minutes, more preferably at least once every 5 minutes, and most preferably continuously, this will provide at least half an hour, or even at least one full hour when measuring the concentration of sulphur dioxide continuously, for purposes of solving said operating problems, after such operating problems have been discovered as a consequence of the measuring of the concentration of the sulphur dioxide in the process gas, before the efficiency of the hydrogen fluoride removal is affected by such operating problems.

According to one embodiment of the present invention the concentration of sulphur dioxide is compared to a sulphur dioxide concentration reference value, with said sulphur dioxide concentration reference value being correlated to the proper removal of the hydrogen fluoride from the process gas. This sulphur dioxide concentration reference value could indicate that a limit on the normal operation has been reached, i.e., a measured sulphur dioxide concentration which is lower than the sulphur dioxide concentration reference value can be deemed to be an indication of the normal operation of the gas cleaning system, or of a specific unit thereof, meaning that, i.e., the removal of hydrogen fluoride falls within the prescribed emission limits therefore. To this end, by comparing the measured sulphur dioxide concentration to the sulphur dioxide concentration reference value a control unit, or an operator, can easily determine whether the gas cleaning system appears to be operating normally, or whether a problem has occurred.

A further object of the present invention is to provide a gas cleaning system, which is designed to be operative for purposes of removing from a process gas at least a part of the hydrogen fluoride that has been generated during the production of aluminium from alumina, with said gas cleaning system being operative to decrease the risk that the emission of the hydrogen fluoride that is present in the process gas will exceed the prescribed emission limits.

This further object of the present invention is realized by means of a gas cleaning system which is operative for removing hydrogen fluoride from the process gas that is generated during the production of aluminium from alumina, and wherein said gas cleaning system comprises a scrubbing chamber, which is designed to be operative for purposes of mixing the process gas with particulate alumina, and a filter device, which is located at a point downstream of the scrubbing chamber with respect to the direction of flow of the process gas such as to thereby be operative for purposes of removing at least a portion of the reaction products formed in the reaction between the particulate alumina and the hydrogen fluoride that is entrained in the process gas, said gas cleaning system is characterized in that said gas cleaning system further comprises
a sulphur dioxide measurement device which is designed to be operative for purposes of measuring the concentration of sulphur dioxide in the process gas at a point located downstream of the filter device, and
a controller which is designed to be operative for purposes of utilizing said measured concentration of sulphur dioxide for purposes of evaluating the efficiency of the hydrogen fluoride removal by said gas cleaning system.

An advantage of this gas cleaning system of the present invention is that it provides a cost efficient means of detecting therewith operating problems, such as problems in the alumina feed to the scrubbing chamber, in sufficient time before such problems can cause a decrease in the efficiency of the hydrogen fluoride removal, as a result of the measuring of the concentration of sulphur dioxide that is present in the cleaned process gas.

Further objects and features of the present invention will be apparent from the description and the claims.

### Brief Description of the Drawings

The present invention will now be described in more detail with reference to the appended drawings in which:
Fig. 1 is a schematic side view of a gas cleaning system constructed in accordance with a first embodiment of the present invention.
Fig. 2 is a schematic side view of a gas cleaning system constructed in accordance with a second embodiment of the present invention.
Fig. 3 is a diagram which illustrates, schematically, the removal of hydrogen fluoride and sulphur dioxide by the gas cleaning system constructed in accordance with the present invention that is illustrated in Fig. 1.
Fig. 4 is a diagram which illustrates, further, the removal of hydrogen fluoride and sulphur dioxide by a gas cleaning system constructed in accordance with the present invention.

### Description of preferred embodiments

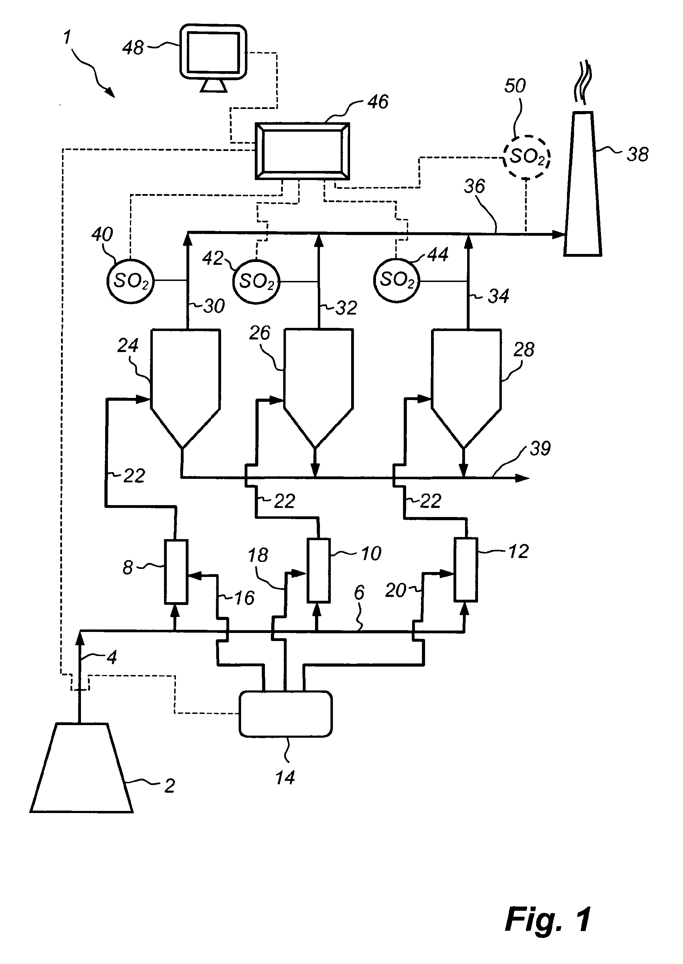

Fig. 1 is a schematic side view illustrating a gas cleaning system 1 constructed in accordance with a first embodiment of the present invention. The gas cleaning system 1 is designed to be operative for purposes of removing gaseous pollutants and dust particles from a process gas, which is generated during an electrolytic reduction process for producing aluminium from alumina. In such an electrolytic reduction process, alumina is treated in a pot, not shown in Fig. 1 in the interest of maintaining clarity of illustration in the drawings, from which there is generated a process gas containing gaseous pollutants, such as hydrogen fluoride and dust particles. The process gas thus generated is collected in a hood 2. A duct 4 is operatively connected to the hood 2 for purposes of transporting the process gas, typically at a temperature of 60-200°C, or even higher, to a horizontal distributing duct 6, which is designed to be operative for purposes of distributing the process gas to a first scrubbing chamber 8 as well as to a second scrubbing chamber 10 and to a third scrubbing chamber 12. As will be best understood from a reference to Fig. 1, all three scrubbing chambers 8, 10, 12 are arranged in parallel relation to each other, with respect to the direction of flow of the process gas. An alumina storage bin 14 contains fresh alumina. A pipe 16 is operatively connected to the alumina storage bin 14 for purposes of transporting fresh alumina from the storage bin 14 to the first scrubbing chamber 8 where the alumina is mixed with the process gas. In a similar manner, a pipe 18 is operatively connected to the alumina storage bin 14 for purposes of transporting fresh alumina to the second scrubbing chamber 10, while a pipe 20 is operatively connected to the alumina storage bin 14 for purposes of transporting fresh alumina to the third scrubbing chamber 12. Each of the scrubbing chambers 8, 10, 12 is operatively connected to a respective one of the ducts 22, each of which is designed to be operative for purposes of transporting the mixture of the fresh alumina and the process gas to a respective one of the filter devices that consist of a first fabric filter 24, a second fabric filter 26, and a third fabric filter 28. A fabric filter, as is well known to those skilled in this art, is a filter device, which is operative based on the principle that a gas is made to pass through a fabric, which may be constructed in the form of a bag, such that the fabric filter is thus often referred to in this art as a bag filter or a bag house. Particles entrained in the gas, which is made to pass therethrough, are captured on the fabric. One example of a bag filter, by way of exemplification and not limitation, is illustrated in US 4,336,035, which is hereby incorporated herein by reference.

The gaseous pollutants that are entrained in the process gas, which is generated in an electrolytic reduction process for producing aluminium from alumina, include hydrogen fluoride, HF, and sulphur dioxide, SO₂. In each of the respective scrubbing chambers 8, 10, 12 the hydrogen fluoride and the sulphur dioxide, which is entrained in the process gas, that is transported thereto reacts with the alumina to form a solid reaction product. The reactions between the alumina and the gaseous pollutants entrained in the process gas occur also on the fabric surfaces of each of the respective fabric filters 24, 26, 28.

Each of the respective fabric filters 24, 26, 28 is provided with a respective clean gas duct 30, 32, 34. Each of the clean gas ducts 30, 32, 34 is operatively connected to a respective one of the fabric filters 24, 26, 28 for purposes of transporting the cleaned process gas from the respective one of the fabric filters 24, 26, 28 to a gas duct 36 that is common to each of the fabric filters 24, 26, 28. The common gas duct 36 is designed to be operative for purposes of transporting the cleaned process gas to a stack 38, which is designed to be operative for purposes of discharging the cleaned process gas to the ambient air. The particles captured in each of the respective fabric filters 24, 26, 28 are removed from the bags of the respective filter 24, 26, 28 and are returned, via a transport system 39, to the aluminium production units, not illustrated in detail in Fig. 1 in the interest of maintaining clarity of illustration in the drawings.

A first sulphur dioxide measurement device in the form of a first sulphur dioxide analyser 40 is designed to be operative for purposes of measuring, continuously, the concentration of sulphur dioxide in the clean gas duct 30. As such, the sulphur dioxide analyser 40 is designed to be operative for purposes of measuring the sulphur dioxide concentration in the process gas at a point that is located downstream of the first fabric filter 24, as viewed with respect to the direction of flow of the process gas. In a similar manner a second sulphur dioxide analyser 42 is designed to be operative for purposes of measuring the sulphur dioxide concentration in the process gas at a point located downstream of the second fabric filter 26, while a third sulphur dioxide analyser 44 is designed to be operative for purposes of measuring the sulphur dioxide concentration in the process gas at a point located downstream of the third fabric filter 28.

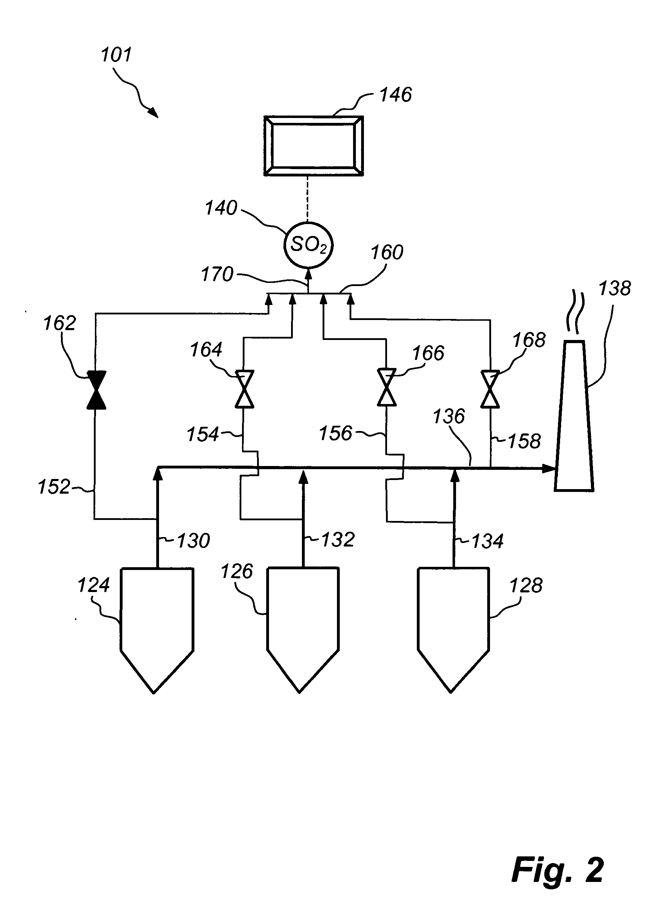

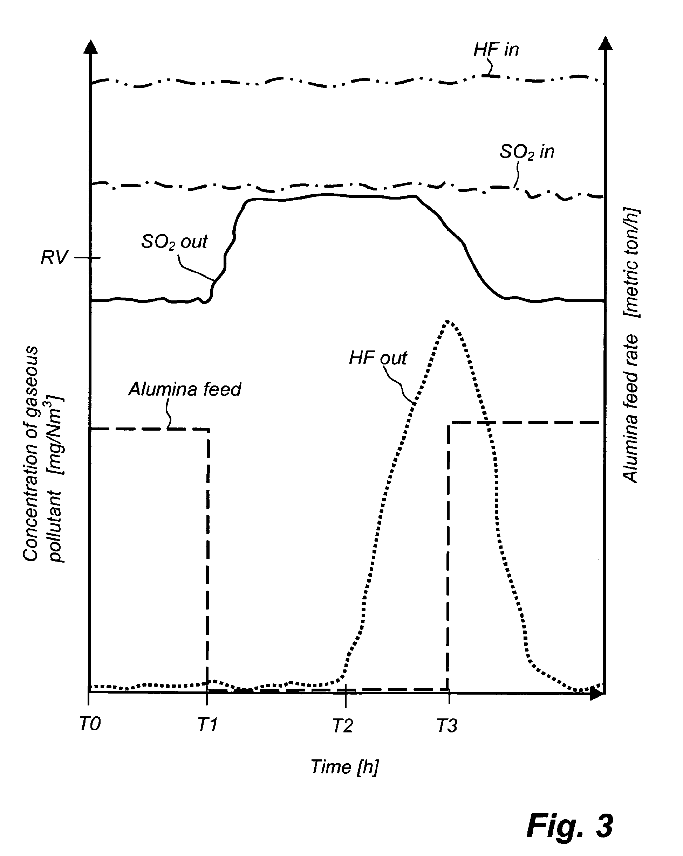

Continuing, a control unit 46 is designed to be operative for purposes of receiving signals from each of the sulphur dioxide analysers 40, 42, 44, wherein such signals contain information regarding the concentration of sulphur dioxide that is measured in each of the clean gas ducts 30, 32, 34, respectively, as well as for purposes of evaluating the efficiency of the hydrogen fluoride removal based on such signals. To this end, the control unit 46 compares the sulphur dioxide concentration that is measured in each of the clean gas ducts 30, 32, 34, respectively, to a sulphur dioxide concentration reference value, wherein such sulphur dioxide concentration reference value is indicative of the normal operation of the applicable part of the gas cleaning system 1, as will be described in more detail hereinafter with reference to Fig. 2 and Fig. 3. To this end, the sulphur dioxide concentration reference value is intended to correspond to the highest sulphur dioxide concentration that could be expected to be present in the cleaned process gas during normal operation, and under the actual conditions existing at the time of the making of the measurement. If the measured sulphur dioxide concentration of each of the clean gas ducts 30, 32, 34 is lower than, or equal to, the sulphur dioxide concentration reference value, then the operation of the gas cleaning system 1 would be expected to be normal. However, if the measured sulphur dioxide concentration in any one of the clean gas ducts 30, 32, 34, such as, for example, in the clean gas duct 30, is higher than the sulphur dioxide concentration reference value, then it would be expected that the fabric filter 24 and/or the first scrubbing chamber 8 are/is not operating properly. As will be described more fully hereinafter, the control unit 46 is operative to interpret a sulphur dioxide concentration that is above the sulphur dioxide concentration reference value as an indication that a decrease in the efficiency of the hydrogen fluoride removal will be forthcoming.

Possible reasons as to why one of the fabric filters 24, 26, 28 and/or one of the scrubbing chambers 8, 10, 12 is operating poorly may be because of problems with the supply of alumina to the scrubbing chamber 8, 10, 12 via the pipes 16, 18, 20, respectively, or because of problems with the mixing of the process gas and alumina inside a respective one of the scrubbing chambers 8, 10, 12, or because of problems with the fabric filters 24, 26, 28, etc. When the control unit 46 detects, based on measurement of the concentration of sulphur dioxide, that a problem exists in the operation of one of the components of the gas cleaning system 1, an alarm message, which may comprise text and/or sound components, is then sent from the control unit 46 to a plant control display 48 that is operatively connected thereto. As such, a plant operator, who is watching the plant control display 48, is thus made aware of the fact that there is an operating problem in the gas cleaning system 1. In addition, the operator is also alarmed therefrom in which part of the gas cleaning system 1 the problem appears to be located.

The control unit 46 may also be designed to initiate efforts to remove whatever appears to be causing the poor operation of the gas cleaning system 1. For example, and as best understood with reference to Fig. 1, the control unit 46 may be designed to be operative for purposes of sending a signal to the alumina storage bin 14. Then, in response to the receipt thereby of such a signal from the control unit 46, the alumina storage bin 14 can be made to be operative for purposes of initiating a blowing operation to thereby clear, e.g., the duct 16 from any obstruction that may be hindering the proper supply of alumina from being fed from the alumina storage bin 14 to the scrubbing chamber 8.

In accordance with an alternative embodiment of the present invention, the gas cleaning system 1 may comprise only one sulphur dioxide analyser 50, with such sulphur dioxide analyser being operative for purposes of measuring the sulphur dioxide concentration in the common gas duct 36, at a point located just upstream of the stack 38. Such an alternative embodiment of the present invention is characterized by the fact that it requires a very low investment cost, since only one sulphur dioxide analyser 50 is thus required. On the other hand, with a single sulphur dioxide analyser 50 it is not possible therewith to provide detailed information concerning in which specific fabric filter 24, 26, 28 and/or in which scrubbing chamber 8, 10, 12 a problem appears to have occurred. Continuing, it will moreover be appreciated that the sulphur dioxide analyser 50 may also, in a still further embodiment of the present invention, be combined with the sulphur dioxide analysers 40, 42, 44, such that therewith the sulphur dioxide concentration can be measured both directly after each of the fabric filters 24, 26, 28 as well as in the common gas duct 36.

In Fig. 2 there is illustrated a second embodiment of the present invention in the form of a gas cleaning system that has been denoted therein by the reference numeral 101. The gas cleaning system 101 is quite similar to the gas cleaning system 1, which has been described hereinbefore and which is illustrated in Fig. 1 of the drawings. The gas cleaning system 101 embodies scrubbing chambers, which are similar to those that are illustrated in Fig. 1 of the drawings and which have been described hereinbefore, and therefore for purposes of maintaining clarity of illustration in the drawings are not shown in Fig 2, for purposes of effecting the mixing of the process gas and the alumina. The gas cleaning system 101 further embodies fabric filters 124, 126, 128 that are designed to be operative for purposes of removing reaction products and excess alumina from the process gas. Each respective one of the fabric filters 124, 126, 128 is operatively connected to a clean gas duct 130, 132, 134, respectively. These clean gas ducts 130, 132, 134 are designed to be operative for purposes of transporting the cleaned process gas from the respective one of the fabric filters 124, 126, 128 to a common gas duct 136, and therefrom to a stack 138. The main difference between the gas cleaning system 1, that has been described hereinbefore and which is illustrated in Fig. 1 of the drawings, and the gas cleaning system 101, which is illustrated in Fig. 2 of the drawings, is that the gas cleaning system 101 embodies only one sulphur dioxide analyser 140. Continuing, in the gas cleaning system 101 in accordance with the illustration thereof in Fig. 2 of the drawings, each of three gas sampling ducts 152, 154, 156 is operatively connected to a respective one of the clean gas ducts 130, 132, 134. Furthermore, in the gas cleaning system 101 a gas sampling duct 158 is connected to the common gas duct 136. Each of the gas sampling ducts 152, 154, 156, 158 is designed to be connected to a common sampling duct 160 and is also provided with a valve 162, 164, 166, 168, respectively. The common sampling duct 160 in turn is connected to a sampling duct 170, which is designed to be operative for purposes of supplying samples of the process gas to the sulphur dioxide analyser 140.

In accordance with the mode of operation of the gas cleaning system 101, each of the valves 162, 164, 166, 168 is designed to be operated for purposes of either allowing or preventing samples of the process gas to be supplied via the gas sampling ducts 152, 154, 156, 158, respectively. In accordance with the illustration of the gas cleaning system 101 in Fig. 2, the valve 162 is illustrated therein as being open, while each of the valves 164, 166, 168 is illustrated therein as being closed. Thus, in accordance with the illustration of the gas cleaning system 101 in Fig. 2, the sulphur dioxide analyser 140 operates to measure the amount of the concentration of sulphur dioxide in the process gas that is flowing in the clean gas duct 130. Thus, by means of the opening and of the closing of respective ones of the valves 162, 164, 166, 168, the sulphur dioxide analyser 140 can be made to be operative to analyse the amount of the concentration of sulphur dioxide that may remain in the cleaned process gas that is flowing through each one of the clean gas ducts 130, 132, 134, as well as the amount of the concentration of sulphur dioxide that may remain in the common gas duct 136. Preferably the valves 162, 164, 166, 168 are designed to be operated in such a manner that the amount of the concentration of sulphur dioxide in each one of the clean gas ducts 130, 132, 134 is measured at least once every 30 minutes, more preferably at least once every 10 minutes, and most preferably at least once every 5 minutes, for reasons that will be described in further detail hereinafter. The sulphur dioxide analyser 140 is designed to be operative to send signals to a control unit 146, such that such signals are operative to indicate the amount of the sulphur dioxide concentration that is present in each respective one of the clean gas ducts 130, 132, 134. The control unit 146 is then designed to respond to the receipt thereby of such signals in a manner that is similar to that which has been described hereinbefore in connection with the description of the gas cleaning system 1, which is illustrated in Fig. 1.

Fig. 3 illustrates schematically one of the findings forming the basis of the embodiments of the gas cleaning system 1 and the gas cleaning system 101 that are illustrated in Fig. 1 and Fig. 2, respectively. To this end, the left Y-axis in Fig. 3 is representative of the amount of the concentration of sulphur dioxide and hydrogen fluoride, which is measured in the process gas at a point that is located upstream of the gas cleaning system 1. Hence, the curves that are labelled "HF in" and "SO₂ in", respectively, in Fig. 3 illustrate the amount of the concentration of hydrogen fluoride and sulphur dioxide, respectively, in the process gas that is present in the duct 4 of Fig. 1, i.e., before any cleaning of the process gas has taken place. On the other hand, the curves that are labelled "HF out" and "SO₂ out", respectively, in Fig. 3 illustrate the amount of the concentration of hydrogen fluoride and sulphur dioxide, respectively, in the process gas that is present in the common gas duct 36, i.e., after cleaning of the process gas has taken place. The right Y-axis in Fig. 3 is representative of the measured amount of fresh alumina that is supplied from the storage bin 14 to each of the scrubbing chambers 8, 10, 12. As such, the curve that is labelled "Alumina feed rate" in Fig. 3 illustrates such a supply of fresh alumina. Finally, the X-axis in Fig. 3 illustrates the time scale in hours, wherein the total time span, which is illustrated in Fig. 3, is about 8 hours.

At the time in time, which is denoted as T0 in Fig. 3, the amount of fresh alumina that is being supplied is at a normal level. Whereas at the time, which is denoted as T1 in Fig. 3, the amount of fresh alumina that is being supplied is stopped, such that the amount of fresh alumina being then supplied is 0 metric tonnes/hr. As will be best understood from a reference to Fig. 3, the amount of the concentration of sulphur dioxide that is present in the cleaned process gas, i.e., that which is depicted by the curve labelled "SO₂ out" in Fig. 3, almost immediately increases up to a level that is very close to the level of the sulphur dioxide concentration that is present in the process gas that is flowing through the duct 4, i.e., that which is depicted by the curve labelled "SO₂ in" in Fig. 3. On the other hand, the amount of the concentration of hydrogen fluoride that is present in the cleaned process gas, i.e., that which is depicted by the curve labelled "HF out" in Fig. 3, remains at a very low level. With further reference to Fig. 3, an increase in the amount of the concentration of hydrogen fluoride in the cleaned process gas, i.e., that which is depicted by the curve labelled "HF out", i.e., a decrease in the efficiency insofar as the removal of hydrogen fluoride is concerned, cannot be observed until the time denoted as T2 in Fig. 3, which is about 1.5 hours after the time denoted as T1 in Fig. 3. As will be best understood from a reference to Fig. 3, the amount of the concentration of hydrogen fluoride that is present in the cleaned process gas increases quite quickly after the time denoted as T2 in Fig. 3.

At the time denoted as T3 in Fig. 3, which is about 2.5 hours after the time denoted as T1 in Fig. 3, the supply of fresh alumina is started again. As depicted in Fig. 3, this results in a relatively rapid increase in the efficiency insofar as the removal of sulphur dioxide and of hydrogen fluoride is concerned, which results in each of the curves labelled "SO₂ out" and "HF out", respectively, being made to move in a downwardly direction, towards their respective levels at the time denoted as T0 in Fig. 3.

Without being bound to any particular theory therefore, it has been found that it appears as if the fresh alumina has a higher affinity for hydrogen fluoride than for sulphur dioxide. As such, when the supply of fresh alumina is stopped at the time that is denoted as T1 in Fig. 3, the amount of fresh alumina that is present in the gas cleaning system 1 becomes relatively scarce. Thus, since the affinity of fresh alumina for hydrogen fluoride is higher than it is for sulphur dioxide, the efficiency insofar as the removal of hydrogen fluoride is concerned remains unaffected for some time, since some fresh alumina remains in the gas cleaning system 1, such as, for instance, on the fabric of the bags of the fabric filters 24, 26, 28. The efficiency insofar as the removal of the sulphur dioxide is concerned, is, on the other hand, affected immediately by the stopping of the supplying of the fresh alumina. Hence, this is the reason for the rapid increase in the amount of the concentration of sulphur dioxide that is present in the process gas that is flowing in the common gas duct 36, which in turn is an indicator that there is a problem insofar as the feeding of fresh alumina is concerned.

Thus, the measurement of the amount of the concentration of sulphur dioxide, which is present in the process gas, is utilized as an early indicator that problems may exist in the gas cleaning system 1, whereby those problems can then be attended to before they give rise to there being an increased amount of the concentration of hydrogen fluoride in the process gas that is flowing in the common gas duct 36 and further to the stack 38 resulting in an increase in the amount of emission of hydrogen fluoride to the atmosphere. Hence, the measurement of the amount of the concentration of sulphur dioxide in the process gas that is flowing in the common gas duct 36 provides, in the form of an indirect measurement, an indication of the efficiency of hydrogen fluoride removal that can be expected as well.

Hereinbefore it has been described, with particular reference to Fig. 3 of the drawings, that the amount of the concentration of sulphur dioxide in the process gas that is flowing in the common gas duct 36 can be measured and can be utilized as an indicator of problems that may exist in the gas cleaning system 1. To this end, it will be appreciated that measuring the amount of the concentration of the sulphur dioxide that is present in the process gas after each specific fabric filter 24, 26, 28 by means of the sulphur dioxide analysers 40, 42, 44, respectively, which are illustrated in Fig. 1, can be utilized for purposes of obtaining information regarding in which specific part of the gas cleaning system 1 a particular problem may have occurred. Thus, for instance, a problem in the first scrubbing chamber 8 can be detected as a consequence of there being a quick increase in the amount of the concentration of sulphur dioxide that is measured by the sulphur dioxide analyser 40.

Furthermore, a sulphur dioxide concentration reference value can be utilized insofar as the mode of operation of the control unit 46 is concerned for purposes of determining when a problem may have occurred. In Fig. 3, such a sulphur dioxide concentration reference value is denoted as RV. Hence, when the measured concentration of sulphur dioxide in the cleaned process gas, i.e. that which is depicted by the curve labelled "SO₂ out" in Fig. 3, reaches the level of the RV value, the control unit 46 is designed to be operative to conclude that a problem has occurred, and is also designed to be operative to initiate the necessary measures to rectify such a problem.

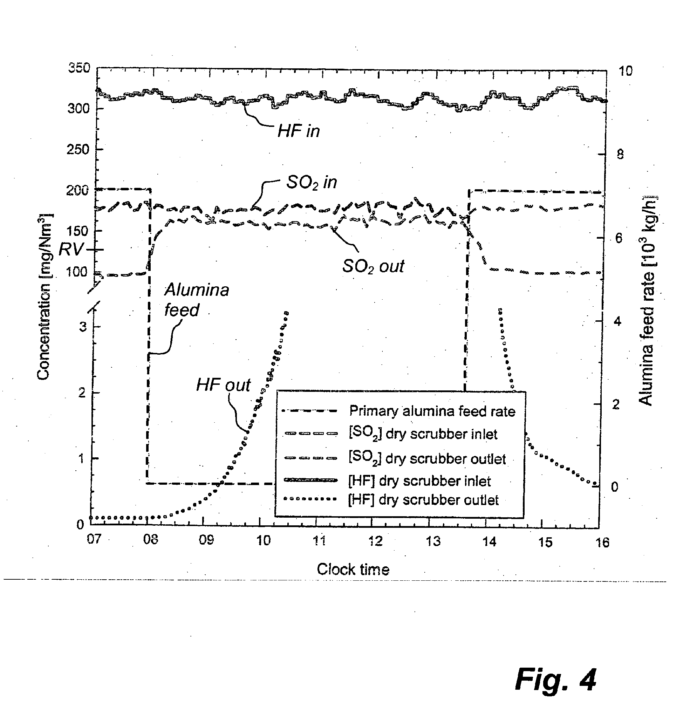

Fig. 4 is a diagram wherein there is illustrated the results produced from the operation in a manner similar to that, which has been described hereinbefore with reference to Fig. 3, of the gas cleaning system 1 and wherein the effect of measuring the amount of the sulphur dioxide concentration that is present in the process gas after the gas cleaning system 1 is analyzed, i.e., by measuring the amount of the sulphur dioxide concentration in the process gas that is flowing in the common gas duct 36. As will be best understood from a reference to Fig. 4, the amount of the concentration of hydrogen fluoride that is present at the inlet to the scrubbing chambers, which is denoted as "[HF] dry scrubber inlet" in Fig. 4, is about 310 mg/Nm³. Continuing with reference to Fig. 4, the amount of the concentration of sulphur dioxide at the inlet to the scrubbing chambers, which is denoted as "[SO₂] dry scrubber inlet" in Fig. 4, is about 180 mg/Nm³. During normal operation, which is illustrated in Fig. 4 at the clock time denoted therein as 07:00, the amount of the outlet concentration of hydrogen fluoride, which is denoted as "[HF] dry scrubber outlet" in Fig. 4, i.e., the amount of the concentration of hydrogen fluoride in the process gas that is flowing in the common gas duct 36, is about 0,05 mg/Nm³. While the amount of the outlet concentration of sulphur dioxide, which is denoted as "[SO₂] dry scrubber outlet" in Fig. 4, is about 100 mg/Nm³.

At the clock time that is denoted as 08:00 in Fig. 4, the amount of fresh alumina being supplied, which is denoted as "Primary alumina feed rate" in Fig. 4, has been reduced from 7000 kg/h to 0 kg/h. As can thus be seen from a reference to Fig. 4, the amount of the outlet concentration of sulphur dioxide increases almost immediately then to a concentration of about 160 mg/Nm³, which is relatively close to the level of the inlet concentration of sulphur dioxide. On the other hand, the amount of the outlet concentration of hydrogen fluoride remains, however, at a concentration of less than 2 mg/Nm³ until the clock time that is denoted as 10:00 in Fig. 4. A typical limit for the emission of hydrogen fluoride, as established by the governmental authorities, could be on the order of 3 - 0.5 mg/Nm³. After the clock time that is denoted as 10:00 in Fig. 4, the amount of the outlet concentration of hydrogen fluoride increases at a relatively rapid rate. At the clock time that is denoted as 13:30 in Fig. 4, the supply of alumina is once again started, and as a consequence thereof the amount of the outlet concentrations of hydrogen fluoride and of sulphur dioxide both return relatively rather quickly to their normal levels. Thus, as will be best understood from a reference to Fig. 4, if a sulphur dioxide concentration reference value RV had been set at, e.g., 130 mg/Nm³, then a warning of problems in the amount of the alumina being supplied would have been already indicated at the clock time that is denoted as 08:10 in Fig. 4, which would have provided much time for solving such a problem, before the amount of the outlet concentration of hydrogen fluoride started to increase steeply at a relatively rapid rate.

It will be appreciated by those skilled in this art that numerous variants of the embodiments previously described hereinabove and illustrated in the drawings are possible within the scope of the appended claims without departing from the essence of the present invention.

For example, while the fabric filters 24, 26, 28 are described herein and are illustrated in the drawings as being separate filter units, which are arranged in parallel with respect to the direction of flow of the process gas, it will be appreciated that it is also possible without departing from the essence of the present invention to utilize only one single fabric filter, which embodies one housing that consists of several compartments, the latter each being independent one from another and being arranged in parallel relation with respect to the direction of flow of the process gas, such that each such individual compartment performs essentially the same function as that which has been described hereinbefore with respect to each of the individual fabric filters 24, 26, 28. On the other hand, it will be appreciated that without departing from the essence of the present invention any number of parallel fabric filters could be employed as well, and/or any number of parallel compartments in one, or several, fabric filters could equally be employed as well. Hence, it would also be possible to utilize a single fabric filter having one single compartment. Furthermore, it will be appreciated that other types of filter devices than bag houses may also equally well be utilized without departing from the essence of the present invention. Examples of such other filter devices include, but are not limited to, electrostatic precipitators, cyclones, ceramic filters, other types of fabric filters, etc. Furthermore, it is also possible without departing from the essence of the present invention to utilize a filter device that combines several filter techniques, such as, for example, a filter device comprising a combination of a cyclone and a bag house.

Hereinbefore it has been described that the concentration of sulphur dioxide is measured by means of a sulphur dioxide analyser, such an analyser being per se known and being available from, among other suppliers, SICK AG, D-79183, Waldkirch, DE, and also from ABB Automation System, Molndal, Sweden, supplying the Advance Optima AO2000 Series analyzers. It will be appreciated that without departing from the essence of the present invention it would also be possible, although generally less preferred since it is time and labour consuming, to make use of manual measurements in accordance with, e.g., what is commonly known as the wet chemical principle by absorbing the sulphur dioxide collected from the sampled process gas in wash bottles.

To summarize, the gas cleaning system 1 is designed for removing hydrogen fluoride from a process gas generated during the production of aluminium from alumina. The gas cleaning system 1 comprises a scrubbing chamber 8, 10, 12 for purposes of mixing the process gas with particulate alumina, and a filter device 24, 26, 28 which is located downstream of the scrubbing chamber 8, 10, 12 with respect to the direction of flow of the process gas. A sulphur dioxide measurement device 40, 42, 44, 50 is operative for measuring the amount of the concentration of sulphur dioxide that is present in the process gas downstream of the filter device 24, 26, 28. A controller 46 is operatively connected to the sulphur dioxide measurement device 40, 42, 44, 50 and is operative for utilizing the measured amount of the concentration of sulphur dioxide for purposes of evaluating the efficiency of the hydrogen fluoride removal by the gas cleaning system 1.

While the present invention has been described and illustrated with reference to a number of preferred embodiments, it is intended that the present invention not be limited to the particular embodiments described and illustrated herein as being the best mode thereof contemplated for carrying out the present invention, but that the present invention will encompass all of the embodiments that fall within the scope of the appended claims. Moreover, the use of the terms first, second, etc. are not intended to denote any order or importance, but rather the terms first, second, etc. are employed herein simply as a means of distinguishing one element from another.

## Claims

1. A method of removing hydrogen fluoride from a process gas generated during the production of aluminium from alumina, said method comprising mixing the process gas with particulate alumina in a scrubbing chamber (8, 10, 12), and transporting the process gas, having at least a part of the particulate alumina entrained therein, from the scrubbing chamber (8, 10, 12) to a filter device (24, 26, 28) in which at least a portion of the reaction products formed in the reaction between the particulate alumina and the hydrogen fluoride is removed from the process gas, **characterized in that** an amount of the concentration of sulphur dioxide in the process gas is measured at a point located downstream of the filter device (24, 26, 28), and that the measured amount of the concentration of sulphur dioxide in the process gas is utilized for purposes of evaluating the efficiency of the hydrogen fluoride removal.

2. A method according to claim 1, wherein said filter device comprises at least two units (24, 26, 28) that are arranged in parallel relation to each other with respect to the direction of flow of the process gas.

3. A method according to claim 2, wherein the amount of the concentration of sulphur dioxide in the process gas is measured separately downstream each of at least two of said at least two units (24, 26, 28).

4. A method according to any one of claims 1-3, wherein the amount of the concentration of sulphur dioxide in the process gas that is measured at a point located downstream of the filter device (24, 26, 28) is measured at least once every 30 minutes.

5. A method according to any one of claims 1-4, wherein the measured amount of the concentration of sulphur dioxide in the process gas is compared to a sulphur dioxide concentration reference value RV, said sulphur dioxide concentration reference value RV being indicative of the proper amount of removal of the hydrogen fluoride from the process gas.

6. A gas cleaning system which is operative for removing hydrogen fluoride from a process gas generated during the production of aluminium from alumina, said gas cleaning system comprising a scrubbing chamber (8, 10, 12) which is designed to be operative for purposes of mixing the process gas with particulate alumina, and a filter device (24, 26, 28) which is located at a point downstream of the scrubbing chamber (8, 10, 12) with respect to the direction of flow of the process gas and which is designed to be operative for purposes of removing at least a portion of the reaction products formed in the reaction between the particulate alumina and the hydrogen fluoride in the process gas, **characterized in that** said gas cleaning system (1; 101) further comprises
a sulphur dioxide measurement device (40, 42, 44, 50; 140) which is designed to be operative for purposes of measuring the amount of the concentration of sulphur dioxide that is present in the process gas at a point located downstream of the filter device (24, 26, 28), and
a controller (46; 146) which is designed to be operative for purposes of utilizing the measured amount of the concentration of sulphur dioxide for purposes of evaluating the efficiency of the hydrogen fluoride removal by the gas cleaning system (1; 101).

7. A gas cleaning system according to claim 6, wherein said filter device comprises at least two units (24, 26, 28) that are arranged in parallel relation to each other with respect to the direction of flow of the process gas.

8. A gas cleaning system according to claim 7, wherein the sulphur dioxide measurement device (40, 42, 44, 50; 140) is designed to be operative for purposes of measuring the amount of the concentration of sulphur dioxide that is present in the process gas separately downstream each of at least two of said at least two units (24, 26, 28).

9. A gas cleaning system according to any one of claims 6-8, wherein the sulphur dioxide measurement device (40, 42, 44, 50; 140) is designed to be operative for purposes of measuring the amount of the concentration of sulphur dioxide at least once every 30 minutes.

10. A gas cleaning system according to any one of claims 6-9, wherein the controller (46; 146) is designed to be operative for purposes of comparing the measured amount of the concentration of sulphur dioxide that is present in the process gas to a sulphur dioxide concentration reference value RV, said sulphur dioxide concentration reference value RV being indicative of the proper amount of removal of the hydrogen fluoride from the process gas.

## Patentansprüche

1. Verfahren zum Entfernen von Fluorwasserstoff aus einem während der Herstellung von Aluminium aus Aluminiumoxid erzeugten Prozessgas, wobei das Verfahren das Mischen des Prozessgases mit Aluminiumoxidpartikeln in einer Waschkammer (8, 10, 12) und das Transportieren des Prozessgases, das mindestens einen Teil der darin mitgerissenen Aluminiumoxidpartikel enthält, von der Waschkammer (8, 10, 12) zu einer Filtervorrichtung (24, 26, 28) umfasst, in der mindestens ein Teil der Reaktionsprodukte, die in der Reaktion zwischen den Aluminiumoxidpartikeln und dem Fluorwasserstoff gebildet werden, aus dem Prozessgas entfernt wird, **dadurch gekennzeichnet, dass** eine Höhe der Konzentration von Schwefeldioxid im Prozessgas an einem Punkt stromabwärts hinter der Filtervorrichtung (24, 26, 28) gemessen wird und dass die gemessene Höhe der Konzentration von Schwefeldioxid im Prozessgas genutzt wird, um den Wirkungsgrad der Fluorwasserstoffentfernung zu bewerten.

2. Verfahren nach Anspruch 1, bei dem die Filtervorrichtung mindestens zwei Einheiten (24, 26, 28) umfasst, die in Bezug auf die Strömungsrichtung des Prozessgases parallel zueinander angeordnet sind.

3. Verfahren nach Anspruch 2, bei dem die Höhe der Konzentration von Schwefeldioxid im Prozessgas stromabwärts hinter jeder von mindestens zwei der mindestens zwei Einheiten (24, 26, 28) separat gemessen wird.

4. Verfahren nach einem der Ansprüche 1 - 3, bei dem die Höhe der Konzentration von Schwefeldioxid im Prozessgas, die an einem Punkt stromabwärts hinter der Filtervorrichtung (24, 26, 28) gemessen wird, mindestens einmal alle 30 Minuten gemessen wird.

5. Verfahren nach einem der Ansprüche 1 - 4, bei dem die gemessene Höhe der Konzentration von Schwefeldioxid im Prozessgas mit einem Schwefeldioxidkonzentrationsreferenzwert RV verglichen wird, wobei der Schwefeldioxidkonzentrationsreferenzwert RV die eigentliche Höhe der Entfernung des Fluorwasserstoffs aus dem Prozessgas angibt.

6. Gasreinigungssystem, das wirksam ist, um Fluorwasserstoff aus einem Prozessgas zu entfernen, das während der Herstellung von Aluminium aus Aluminiumoxid erzeugt wird, wobei das Gasreinigungssystem eine Waschkammer (8, 10, 12), die so ausgelegt ist, dass das Prozessgas mit Aluminiumoxidpartikeln gemischt werden kann, und eine Filtervorrichtung (24, 26, 28) umfasst, die an einem Punkt stromabwärts hinter der Waschkammer (8, 10, 12) in Bezug auf die Strömungsrichtung des Prozessgases vorgesehen und so ausgelegt ist, dass mindestens ein Teil der Reaktionsprodukte, die in der Reaktion zwischen den Aluminiumoxidpartikeln und dem Fluorwasserstoff im Prozessgas gebildet werden, entfernt werden kann, **dadurch gekennzeichnet, dass** das Gasreinigungssystem (1; 101) weiterhin Folgendes umfasst:
eine Schwefeldioxidmessvorrichtung (40, 42, 44, 50; 140), die so ausgelegt ist, dass die Höhe der Konzentration von Schwefeldioxid gemessen werden kann, die im Prozessgas an einem Punkt stromabwärts hinter der Filtervorrichtung (24, 26, 28) vorhanden ist; und
ein Kontrollelement (46; 146), das so ausgelegt ist, dass die gemessene Höhe der Konzentration von Schwefeldioxid genutzt werden kann, um den Wirkungsgrad der Fluorwasserstoffentfernung durch das Gasreinigungssystem (1; 101) zu bewerten.

7. Gasreinigungssystem nach Anspruch 6, bei dem die Filtervorrichtung mindestens zwei Einheiten (24, 26, 28) umfasst, die in Bezug auf die Strömungsrichtung des Prozessgases parallel zueinander angeordnet sind.

8. Gasreinigungssystem nach Anspruch 7, bei dem die Schwefeldioxidmessvorrichtung (40, 42, 44, 50; 140) so ausgelegt ist, dass die Höhe der Konzentration von Schwefeldioxid, die im Prozessgas stromabwärts hinter jeder von mindestens zwei der mindestens zwei Einheiten (24, 26, 28) vorhanden ist, separat gemessen werden kann.

9. Gasreinigungssystem nach einem der Ansprüche 6 - 8, bei dem die Schwefeldioxidmessvorrichtung (40, 42, 44, 50; 140) so ausgelegt ist, dass die Höhe der Konzentration von Schwefeldioxid mindestens einmal alle 30 Minuten gemessen werden kann.

10. Gasreinigungssystem nach einem der Ansprüche 6 - 9, bei dem das Kontrollelement (46; 146) so ausgelegt ist, dass die gemessene Höhe der Konzentration von Schwefeldioxid, die im Prozessgas vorhanden ist, mit einem Schwefeldioxidkonzentrationsreferenzwert RV verglichen werden kann, wobei der Schwefeldioxidkonzentrationsreferenzwert RV die eigentliche Höhe der Entfernung des Fluorwasserstoffs aus dem Prozessgas angibt.

## Revendications

1. Procédé permettant d'éliminer du fluorure d'hydrogène dans un gaz de procédé produit au cours de la production d'aluminium à partir d'alumine, ledit procédé comprenant le mélange du gaz de procédé avec de l'alumine particulaire dans une chambre de lavage (8, 10, 12), et le transport du gaz de procédé, dans lequel est entraînée au moins une partie de l'alumine particulaire, depuis la chambre de lavage (8, 10, 12) vers un dispositif de filtre (24, 26, 28) dans lequel au moins une partie des produits de réaction formés dans la réaction entre l'alumine particulaire et le fluorure d'hydrogène est éliminée du gaz de procédé, **caractérisé en ce qu'**une quantité de la concentration de dioxyde de soufre dans le gaz de procédé est mesurée en un point situé en aval du dispositif de filtre (24, 26, 28), et **en ce que** la quantité mesurée de la concentration de dioxyde de soufre dans le gaz de procédé est utilisée dans le but d'évaluer l'efficacité de l'élimination du fluorure d'hydrogène.

2. Procédé selon la revendication 1, dans lequel ledit dispositif de filtre comprend au moins deux unités (24, 26, 28) qui sont disposées en parallèle l'une à l'autre par rapport à la direction de l'écoulement du gaz de procédé.

3. Procédé selon la revendication 2, dans lequel la quantité de la concentration de dioxyde de soufre dans le gaz de procédé est mesurée séparément en aval de chacune d'au moins deux desdites au moins deux unités (24, 26, 28).

4. Procédé selon l'une quelconque des revendications 1-3, dans lequel la quantité de la concentration de dioxyde de soufre dans le gaz de procédé qui est mesurée en un point situé en aval du dispositif de filtre (24, 26, 28) est mesurée au moins une fois toutes les 30 minutes.

5. Procédé selon l'une quelconque des revendications 1-4, dans lequel la quantité mesurée de la concentration de dioxyde de soufre dans le gaz de procédé est comparée à une valeur de référence de la concentration de dioxyde de soufre RV, ladite valeur de référence de la concentration de dioxyde de soufre RV étant une indication de la quantité correcte de fluorure d'hydrogène éliminée du gaz de procédé.

6. Système de nettoyage des gaz dont le fonctionnement permet d'éliminer le fluorure d'hydrogène dans un gaz de procédé produit au cours de la production d'aluminium à partir d'alumine, ledit système de nettoyage des gaz comprenant une chambre de lavage (8, 10, 12) qui est conçue pour servir à mélanger le gaz de procédé avec de l'alumine particulaire, et un dispositif de filtre (24, 26, 28) qui est situé en un point en aval de la chambre de lavage (8, 10, 12) par rapport à la direction de l'écoulement du gaz de procédé et qui est conçu pour servir à éliminer au moins une partie des produits de réaction formés dans la réaction entre l'alumine particulaire et le fluorure d'hydrogène dans le gaz de procédé, **caractérisé en ce que** ledit système de nettoyage des gaz (1 ; 101) comprend en outre
un dispositif de mesure du dioxyde de soufre (40, 42, 44, 50 ; 140) qui est conçu pour servir à mesurer la quantité de la concentration de dioxyde qui est présente dans le gaz de procédé en un point situé en aval du dispositif de filtre (24, 26, 28), et
un contrôleur (46 ; 146) qui est conçu pour servir à utiliser la quantité mesurée de la concentration de dioxyde de soufre dans le but d'évaluer l'efficacité de l'élimination du fluorure d'hydrogène par le système de nettoyage des gaz (1 ; 101).

7. Système de nettoyage des gaz selon la revendication 6, dans lequel ledit dispositif de filtre comprend au moins deux unités (24, 26, 28) qui sont disposées en parallèle l'une à l'autre par rapport à la direction de l'écoulement du gaz de procédé.

8. Système de nettoyage des gaz selon la revendication 7, dans lequel le dispositif de mesure du dioxyde de soufre (40, 42, 44, 50 ; 140) est conçu pour servir à mesurer la quantité de la concentration de dioxyde de soufre qui est présent dans le gaz de procédé séparément en aval de chacune d'au moins deux desdites au moins deux unités (24, 26, 28).

9. Système de nettoyage des gaz selon l'une quelconque des revendications 6-8, dans lequel le dispositif de mesure du dioxyde de soufre (40, 42, 44, 50 ; 140) est conçu pour servir à mesurer la quantité de la concentration de dioxyde de soufre au moins une fois toutes les 30 minutes.

10. Système de nettoyage des gaz selon l'une quelconque des revendications 6-9, dans lequel le contrôleur (46 ; 146) est conçu pour servir à comparer la quantité mesurée de la concentration de dioxyde de soufre qui est présent dans le gaz de procédé à une valeur de référence de la concentration de dioxyde de soufre RV, ladite valeur de référence de la concentration de dioxyde de soufre RV étant une indication de la quantité correcte de fluorure d'hydrogène éliminée du gaz de procédé.
